# EUROPÄISCHE PATENTANMELDUNG

(11) **EP 4 289 534 A1**
(43) Veröffentlichungstag der Anmeldung: **13.12.2023**
(21) Anmeldenummer: 22177439.1
(22) Anmeldetag: 07.06.2022
(51) Int. Cl.: B23B 45/02, B23B 39/00

(54) **VERFAHREN ZUM BETRIEB EINER WERKZEUGMASCHINE MIT UNTERSCHIEDLICHEN GERÄTE- UND MOTORKENNLINIEN**

(71) Anmelder: Hilti Aktiengesellschaft, 9494 Schaan (LI)
(72) Erfinder: Schaefer, Martin, 6858 Schwarzach (AT)
(74) Vertreter: Hilti Aktiengesellschaft Corporate Intellectual Property

(57) **Zusammenfassung**

Die vorliegende Erfindung betrifft ein Verfahren zum Betrieb einer Werkzeugmaschine, wobei die Werkzeugmaschine gemäß unterschiedlicher Geräte- und Motorkennlinen betrieben werden kann. Dabei kann die Werkzeugmaschine zunächst gemäß einer ersten Geräte- und Motorkennlinie betrieben werden, wobei ein Umschalten von der ersten Geräte- und Motorkennlinie auf eine zweite Geräte- und Motorkennlinie dann erfolgt, wenn ein Knickpunkt der ersten Geräte- und Motorkennlinie erreicht wird. Der Betrieb der Werkzeugmaschine wird anschließend gemäß der zweiten Geräte- und Motorkennlinie fortgesetzt. In einem weiteren Aspekt betrifft die Erfindung eine Werkzeugmaschine, wobei die Werkzeugmaschine vorzugsweise als Bohrgerät, bevorzugt als Kernbohrgerät, ausgebildet ist.

## Beschreibung

Die vorliegende Erfindung betrifft ein Verfahren zum Betrieb einer Werkzeugmaschine, wobei die Werkzeugmaschine gemäß unterschiedlicher Geräte- und Motorkennlinen betrieben werden kann. Dabei kann die Werkzeugmaschine zunächst gemäß einer ersten Geräte- und Motorkennlinie betrieben werden, wobei ein Umschalten von der ersten Geräte- und Motorkennlinie auf eine zweite Geräte- und Motorkennlinie dann erfolgt, wenn ein Knickpunkt der ersten Geräte- und Motorkennlinie erreicht wird. Der Betrieb der Werkzeugmaschine wird anschließend gemäß der zweiten Geräte- und Motorkennlinie fortgesetzt. In einem weiteren Aspekt betrifft die Erfindung eine Werkzeugmaschine, wobei die Werkzeugmaschine vorzugsweise als Bohrgerät, bevorzugt als Kernbohrgerät, ausgebildet ist.

### Hintergrund der Erfindung:

Im Stand der Technik sind Werkzeugmaschinen bekannt, mit denen Arbeiten - beispielsweise auf einer Baustelle oder im Heimwerkerbereich - durchgeführt werden können. Werkzeugmaschinen können Schneide- oder Trenngeräte, Winkel- oder Trennschleifer, Kernbohrgeräte, Bohrhämmer oder Bohrmeißel sein, ohne darauf beschränkt zu sein. Die Werkzeugmaschinen umfassen üblicherweise Werkzeuge, bei denen es sich um scheibenförmige, rotierende Werkzeuge handeln kann, wie Trenn- oder Schleifscheiben, oder um schlagende oder meißelnde Werkzeuge. Darüber hinaus sind im Stand der Technik Werkzeugmaschine bekannt, mit denen im Wesentlichen zylinderförmige Bohrkerne aus einem Untergrund herausgeschnitten werden können. Bei diesen Werkzeugmaschinen kann es sich um Bohrgeräte bzw. Kernbohrgeräte handeln. Kembohrgeräte weisen z.B. Bohrkronen als Werkzeuge auf, die von dem Kernbohrgerät zu einer Drehbewegung angetrieben werden können.

Die Werkzeuge der Werkzeugmaschinen, die aus dem Stand der Technik bekannt sind, werden zumeist über einen Elektromotor im Inneren der Werkzeugmaschine angetrieben. Der Motor dreht sich, wobei die Drehung des Motors in eine Drehung des Werkzeugs oder eine Schlag- oder Meißelbewegung des Werkzeugs umgesetzt wird. Zusätzlich können Werkzeugmaschinen mit einem Getriebe ausgerüstet sein, so dass die Werkzeugmaschine in verschiedenen Gängen betrieben werden kann. Viele der Werkzeugmaschinen können mit unterschiedlichen Werkzeugen betrieben werden. Beispielsweise können an einem Schleifgerät unterschiedliche Schleifscheiben befestigt werden, um unterschiedliche Aufgaben bzw. Anforderungen zu erfüllen. Kernbohrgeräte können beispielsweise mit Bohrkronen mit unterschiedlichen Durchmessern betrieben werden, um unterschiedlich große Bohrungen zu erstellen. Die Werkzeuge der Werkzeugmaschinen können sich beispielsweise im Feinheitsgrad, in der Größe, dem Durchmesser oder vielen anderen Eigenschaften unterscheiden. Bisher ist es im Stand der Technik so, dass die Werkzeugmaschinen zumeist mit einem oder mehreren Standard-Parametersätze von Drehzahl und Drehmoment betrieben werden. Die Umstellung von einem Parametersatz zu einem anderen Parametersatz erfolgt üblicherweise manuell durch den Anwender. Der Anwender stellt das verbindende Element dar, indem er, je nach Applikation, unterschiedliche Parametersätze einstellt. Dieser Umstand kann für einzelne Anwendungsfälle dazu führen, dass die durchzuführende Arbeit nicht optimal ausgeführt werden kann, weil die Arbeitsparameter, wie Drehzahl oder Drehmoment, nicht optimal auf das verwendete Werkzeug, die vorliegenden Werkzeugmaschinen, das verwendete Werkzeug oder den entsprechenden Anwendungsfall abstimmt sind.

Die Aufgabe, die der vorliegenden Erfindung zugrunde liegt, besteht darin, die vorstehend beschriebenen Nachteile des Standes der Technik zu überwinden und ein Verfahren zum Betrieb einer Werkzeugmaschine anzugeben, bei dem Arbeitsparameter, wie Drehzahl und Drehmoment, besser und bevorzugt automatisch an unterschiedliche Werkzeuge, zu bearbeitende Untergründe oder Anwendungsfälle angepasst werden können. Es soll ferner eine Werkzeugmaschine bereitgestellt werden, mit der das vorzuschlagende Verfahren umgesetzt werden kann. Ein besonderes Anliegen der Erfindung besteht darin, eine verbesserte Anpassung des Betriebsverhaltens der Werkzeugmaschine für verschiedene Anwendungsfälle bereitzustellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Betrieb einer Werkzeugmaschine vorgesehen, wobei die Werkzeugmaschine gemäß unterschiedlicher Geräte- und Motorkennlinen betreibbar ist, Das Verfahren ist durch die folgenden Verfahrensschritte gekennzeichnet:
a) Betrieb der Werkzeugmaschine gemäß einer ersten Geräte- und Motorkennlinie,
b) Umschalten von der ersten Geräte- und Motorkennlinie auf eine zweite Geräte- und Motorkennlinie, wenn ein Knickpunkt der ersten Geräte- und Motorkennlinie erreicht wird,
c) Fortsetzung des Betriebs der Werkzeugmaschine gemäß der zweiten Geräte- und Motorkennlinie.

Die Geräte- und Motorkennlinien können jeweils einen Knickpunkt aufweisen, wobei die Knickpunkte die Geräte- und Motorkennlinien in einen ersten Bereich und einen zweiten Bereich unterteilen und wobei in dem ersten Bereich eine Drehzahl n im Wesentlichen konstant bleibt, während ein Drehmoment M ansteigt und wobei in dem zweiten Bereich die Drehzahl n stark abfällt. In dem zweiten Bereich kann das Drehmoment M weiter zunehmen. Mit anderen Worten ist es im Sinne der Erfindung bevorzugt, dass die Geräte- und Motorkennlinien jeweils einen Knickpunkt aufweisen, wobei die Knickpunkte die Geräte- und Motorkennlinien in einen ersten Bereich und einen zweiten Bereich unterteilen, wobei in dem ersten Bereich eine Drehzahl n im Wesentlichen konstant bleibt, während ein Drehmoment M ansteigt und wobei in dem zweiten Bereich die Drehzahl n stark abfällt, während das Drehmoment M weiter zunimmt. Das bedeutet im Sinne der Erfindung bevorzugt, dass die Geräte- und Motorkennlinien jeweils einen Knickpunkt aufweisen können, wobei die Knickpunkte die Geräte- und Motorkennlinien vorzugsweise in einen ersten Bereich und einen zweiten Bereich unterteilen. In dem ersten Bereich der Geräte- und Motorkennlinie bleibt eine Drehzahl n vorzugsweise im Wesentlichen konstant, während ein Drehmoment M ansteigt, während in dem zweiten Bereich der Geräte- und Motorkennlinie die Drehzahl n vorzugsweise stark abfällt und das Drehmoment M weiter zunimmt.

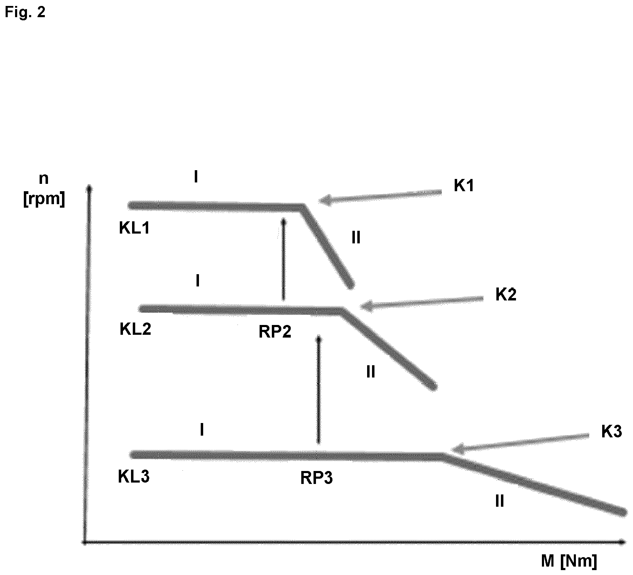

Der Begriff "Knickpunkt" ist abgeleitet von der bevorzugten Ausgestaltung der Erfindung, bei dem die Geräte- und Motorkennlinien mindestens zwei unterschiedliche Bereich aufweisen - beispielsweise einen ersten Bereich I und einen zweiten Bereich II, wie in Figur 2 dargestellt. Dabei repräsentieren die unterschiedlichen Bereiche der Geräte- und Motorkennlinien vorzugsweise unterschiedliche Verhaltensweisen der Werkzeugmaschine. Es kann aber im Sinne der Erfindung auch bevorzugt sein, dass die Geräte- und Motorkennlinien keine unterschiedlichen Bereiche aufweisen. In diesem Fall ist der Begriff "Knickpunkt" vorzugsweise als Umschaltpunkt zwischen den Geräte- und Motorkennlinien zu verstehen. Das bedeutet im Sinne der Erfindung bevorzugt, dass ein Umschalten zwischen den unterschiedlichen Geräte- und Motorkennlinien an dem Umschaltpunkt erfolgt, d.h. bevorzugt dann, wenn ein Umschaltpunkt der ursprünglichen oder anfänglichen Geräte- und Motorkennlinie erreicht wird. Beispielsweise kann die Werkzeugmaschine von einem Betrieb gemäß der ersten Geräte- und Motorkennlinie in einen Betrieb gemäß der zweiten Geräte- und Motorkennlinie umschalten, wenn der Umschaltpunkt der ersten Geräte- und Motorkennlinie erreicht wird. Wenn die Werkzeugmaschine entsprechend der zweiten Geräte- und Motorkennlinie betrieben wird, kann die Werkzeugmaschine in einen Betrieb gemäß der dritten Geräte- und Motorkennlinie umschalten, wenn der Umschaltpunkt der zweiten Geräte- und Motorkennlinie erreicht wird.

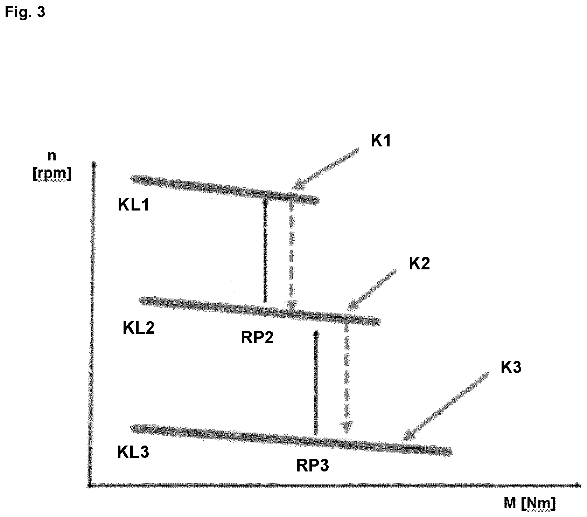

Der Begriff "Knickpunkt" ist im Sinne der Erfindung nicht als fixer Punkt zu verstehen, sondern vielmehr als "Knickbereich". Der Knickpunkt einer Geräte- und Motorkennlinie wird vorzugsweise von einem Drehmomentwert und einem Drehzahlwert festgelegt, wobei der Drehzahlwert des Knickpunkts vorzugsweise dem im Wesentlichen konstanten Drehzahlwert im ersten Bereich einer Geräte- und Motorkennlinie entspricht. Der Drehmomentwert des Knickpunkts kann beispielsweise von dem Hersteller der Werkzeugmaschine vorgegeben oder anderweitig festgelegt werden. Die Formulierung, dass Begriff "Knickpunkt" ist nicht als fixer Punkt zu verstehen, sondern vielmehr als "Knickbereich" zu verstehen ist, bedeutet im Sinne der Erfindung bevorzugt, dass der Drehmomentwert des Knickpunkts nicht notwendigerweise auf einen fixen Wert, wie 80 Newtonmeter (Nm) festgelegt sein muss, sondern dass ein Umschalten zwischen den Geräte- und Motorkennlinien der Werkzeugmaschine beispielsweise in einem Bereich von +/- 10 % eines vorgegebenen Drehmomentwert des Knickpunkts erfolgen kann. In dem Beispiel, bei dem ein möglicher Drehmomentwert des Knickpunkts bei 80 Nm liegt, könnte ein Umschalten zwischen den Geräte- und Motorkennlinien der Werkzeugmaschine beispielsweise auch zwischen 72 und 88 Nm erfolgen. In einem anderen Ausführungsbeispiel der Erfindung können auch kleinere Umschalt- oder Knickbereiche umgesetzt werden, bei denen das Umschalten zwischen den Geräte- und Motorkennlinien der Werkzeugmaschine beispielsweise bei +/- 5 % oder +/- 2 % eines Ausgangswerts erfolgt. Insbesondere dann, wenn der Knickpunkt von einer Verhaltensänderung der Werkzeugmaschine festgelegt wird, wie in dem in Figur 2 dargestellten Ausführungsbeispiel der Erfindung, so kann es im Sinne der Erfindung bevorzugt sein, dass das Umschalten zwischen den Geräte- und Motorkennlinien der Werkzeugmaschine nicht exakt bei Erreichen des Knickpunkts erfolgt, sondern kurz davor oder kurz danach bzw. bei geringfügig geringeren oder höheren Drehmomentwerten. Bei dem in Figur 2 dargestellten Ausführungsbeispiel der Erfindung ist es vorzugsweise so, dass der Knickpunkt den Übergang zwischen zwei unterschiedlichen Verhaltensmustern der Werkzeugmaschine repräsentiert, wobei der Bereich links vom Knickpunkt dem ersten Bereich der Geräte- und Motorkennlinie entspricht, der insbesondere durch einen im Wesentlichen konstanten Verlauf der Drehzahl n gekennzeichnet ist, während der Bereich rechts vom Knickpunkt dem zweiten Bereich der Geräte- und Motorkennlinie entspricht und durch einen raschen Abfall der Drehzahl n gekennzeichnet ist. Es sind im Kontext der Erfindung allerdings auch andere Verläufe von Geräte- und Motorkennlinien denkbar. Beispielsweise können Geräte- und Motorkennlinien auch die Form einer im Wesentlichen kontinuierlich abfallenden Gerade aufweisen. Wenn die Geräte- und Motorkennlinie beispielsweise die Form einer im Wesentlichen kontinuierlich abfallenden Gerade aufweist, kann der Knick- oder Umschaltpunkt, bei dem das Umschalten zwischen zwei Geräte- und Motorkennlinien der Werkzeugmaschine erfolgt, frei festgelegt werden, beispielsweise durch den Gerätehersteller vor Auslieferung der Werkzeugmaschine. Beispiele für Geräte- und Motorkennlinien, die die Form einer abfallenden Gerade haben, sind exemplarisch in Figur 3 dargestellt.

Die Knickpunkte der Geräte- und Motorkennlinien der Werkzeugmaschine können beispielsweise in Beziehung zueinander stehen und wie folgt festgelegt werden:
- Der Drehmomentwert des Knickpunkts K2 der zweiten Geräte- und Motorkennlinie KL2 kann beispielsweise dem Drehmomentwert des Knickpunkts K1 der ersten Geräte- und Motorkennlinie KL1 entsprechen, multipliziert mit einem Faktor 1,5.
- Der Drehmomentwert des Knickpunkts K3 der dritten Geräte- und Motorkennlinie KL3 kann beispielsweise dem Drehmomentwert des Knickpunkts K2 der zweiten Geräte- und Motorkennlinie KL2 entsprechen, multipliziert mit einem Faktor 1,3.

Die Knickpunkte der Geräte- und Motorkennlinien der Werkzeugmaschine können beispielsweise auch in Beziehung zu den später genauer erläuterten Rückkehrpunkten stehen und wie folgt festgelegt werden:
- Der Drehmomentwert des Knickpunkts K1 der ersten Geräte- und Motorkennlinie KL1 kann beispielsweise dem Drehmomentwert des Rückkehrpunkts RP2 der zweiten Geräte- und Motorkennlinie KL2 entsprechen, multipliziert mit einem Faktor 1,1.
- Der Drehmomentwert des Knickpunkts K2 der zweiten Geräte- und Motorkennlinie KL2 kann beispielsweise dem Drehmomentwert des Rückkehrpunkts RP3 der dritten Geräte- und Motorkennlinie KL3 entsprechen, multipliziert mit einem Faktor 1,1, usw.

Analog dazu können die Rückkehrpunkte der Geräte- und Motorkennlinien der Werkzeugmaschine auch in Abhängigkeit von den Knickpunkten der Geräte- und Motorkennlinien festgelegt werden.
- Beispielsweise kann der Drehmomentwert des Rückkehrpunkts RP2 der zweiten Geräte- und Motorkennlinie KL2 dem Drehmomentwert des Knickpunkts K1 der ersten Geräte- und Motorkennlinie KL1 entsprechen, multipliziert mit einem Faktor 0,9 oder 0,8.
- Beispielsweise kann der Drehmomentwert des Rückkehrpunkts RP3 der dritten Geräte- und Motorkennlinie KL3 dem Drehmomentwert des Knickpunkts K2 der zweiten Geräte- und Motorkennlinie KL2 entsprechen, multipliziert mit einem Faktor 0,9 oder 0,8.

Mit der Erfindung kann eine Betriebsverfahren und eine Werkzeugmaschine bereitgestellt werden, mit denen der Nutzer bei der Arbeit mit der Werkzeugmaschine unterstützt und eine Anzahl von durch den Nutzer vorzunehmenden Einstellungen reduziert werden kann. Tests haben gezeigt, dass die Arbeit mit der Werkzeugmaschine für den Nutzer deutlich vereinfacht und gleichzeitig die Nutzung der Werkzeugmaschine verbessert werden kann. Dies insbesondere dadurch, dass der Betrieb der Werkzeugmaschine optimal auf das Werkzeug der Werkzeugmaschine und/oder einen zu bearbeitenden Untergrund angepasst werden kann. Es ist im Sinne der Erfindung bevorzugt, dass es sich bei der Werkzeugmaschine um ein Gerät mit elektronischen Gängen handelt, wobei das Gerät insbesondere als Kernbohrgerät ausgebildet sein kann. Vorzugsweise kann die Werkzeugmaschine mit einer Energieversorgungsvorrichtung verbunden werden, um eine Energieversorgung der Werkzeugmaschine sicherzustellen. Bei der Energieversorgungsvorrichtung kann es sich vorzugsweise um eine wiederaufladbare Batterie oder einen Akkumulator handeln.

Es ist im Sinne der Erfindung bevorzugt, dass das Verfahren mit folgender Maßgabe wiederholt kann:
a) Betrieb der Werkzeugmaschine gemäß einer i-ten Geräte- und Motorkennlinie,
b) Umschalten von der i-ten Geräte- und Motorkennlinie auf eine (i+1)-te Geräte- und Motorkennlinie, wenn ein Knickpunkt K_i der i-ten Geräte- und Motorkennlinie erreicht wird,
c) Fortsetzung des Betriebs der Werkzeugmaschine gemäß der (i+1)-ten Geräte- und Motorkennlinie.

Es ist im Sinne der Erfindung bevorzugt, dass der Knickpunkt K2 der zweiten Geräte- und Motorkennlinie im Vergleich zum Knickpunkt K1 der ersten Geräte- und Motorkennlinie zu höheren Drehmomenten M verschoben ist. Das bedeutet im Sinne der Erfindung bevorzugt, dass bei dem Wertepaar (M2/n2), das dem zweiten Knickpunkt K2, d.h. dem Knickpunkt der zweiten Geräte- und Motorkennlinie, zugeordnet werden kann, der Wert M für das Drehmoment größer ist als bei dem Wertepaar (M1/n1), das dem ersten Knickpunkt K1, d.h. dem Knickpunkt der ersten Geräte- und Motorkennlinie, zugeordnet werden kann. Dasselbe gilt sinngemäß für den Vergleich der zweiten und dritten Knickpunkte und allgemein für den Vergleich eines i-ten Knickpunkts mit einem (i+1)-ten Knickpunkt. Vorzugsweise ist bei dem Wertepaar (M3/n3), das dem dritten Knickpunkt K3, d.h. dem Knickpunkt der dritten Geräte- und Motorkennlinie, zugeordnet werden kann, der Wert M für das Drehmoment größer ist als bei dem Wertepaar (M2/n2), das dem zweiten Knickpunkt K2, d.h. dem Knickpunkt der zweiten Geräte- und Motorkennlinie, zugeordnet werden kann. Analog ist bei dem Wertepaar (M_i+1/n_i+1), das dem (i+1)-ten Knickpunkt K_i+1, d.h. dem Knickpunkt der (i+1)-ten Geräte- und Motorkennlinie, zugeordnet werden kann, der Wert M für das Drehmoment größer ist als bei dem Wertepaar (M_i/n_i), das dem i-ten Knickpunkt K_i, d.h. dem Knickpunkt der i-ten Geräte- und Motorkennlinie, zugeordnet werden kann.

Es ist im Sinne der Erfindung bevorzugt, dass die zweite Geräte- und Motorkennlinie im zweiten Bereich im Vergleich zur ersten Geräte- und Motorkennlinie weniger stark abfällt. Das bedeutet im Sinne der Erfindung bevorzugt, dass die erste Geräte- und Motorkennlinie im zweiten Bereich, d.h. nach Überschreiten des ersten Knickpunkts, einen sehr starken Abfall aufweist, wobei der Abfall der zweiten Geräte- und Motorkennlinie in diesem zweiten Bereich weniger stark ausgeprägt ist wie der bei der ersten Geräte- und Motorkennlinie. Dasselbe gilt sinngemäß für den Vergleich der zweiten und dritten Geräte- und Motorkennlinie, sowie allgemein für den Vergleich einer i-ten und einer (i+1)-ten Geräte- und Motorkennlinie. Es ist im Sinne der Erfindung bevorzugt, dass die dritte Geräte- und Motorkennlinie im zweiten Bereich im Vergleich zur zweiten Geräte- und Motorkennlinie weniger stark abfällt bzw. dass die (i+1)-te Geräte- und Motorkennlinie im zweiten Bereich im Vergleich zur i-ten Geräte- und Motorkennlinie weniger stark abfällt. Das bedeutet im Sinne der Erfindung bevorzugt, dass die zweite Geräte- und Motorkennlinie im zweiten Bereich, d.h. nach Überschreiten des zweiten Knickpunkts, einen stärkeren Abfall aufweist als die dritte Geräte- und Motorkennlinie. Analog weist die i-te Geräte- und Motorkennlinie im zweiten Bereich, d.h. nach Überschreiten des i-ten Knickpunkts, einen stärkeren Abfall aufweist als die (i+1)-te Geräte- und Motorkennlinie.

Es ist im Sinne der Erfindung bevorzugt, dass die Werkzeugmaschine beim Umschalten zwischen zwei Geräte- und Motorkennlinien ein akustisches und/oder optisches Signal ausgibt. Auf diese Weise kann der Nutzer von dem Umschalten zwischen zwei Geräte- und Motorkennlinien Kenntnis erlangen und die Bedienung der Werkzeugmaschine anpassen. Beispielsweise kann der Nutzer den Anpressdruck, mit dem er die Werkzeugmaschine auf den zu bearbeitenden Unterdruck drückt, nach Erhalt des akustischen und/oder optischen Signals erhöhen oder reduzieren, um auf diese Weise den Bohr- oder Arbeitsfortschritt mit der Werkzeugmaschine zu optimieren.

Es ist im Sinne der Erfindung bevorzugt, dass die Werkzeugmaschine bei Erreichen eines zweiten Rückkehrpunkts von der zweiten Geräte- und Motorkennline zur ersten Geräte- und Motorkennline zurückkehrt. Allgemein gesprochen ist es im Sinne der Erfindung bevorzugt, dass die Werkzeugmaschine dazu eingerichtet ist, bei Erreichen eines Rückkehrpunkts von einer höheren Geräte- und Motorkennline zu einer niedrigeren Geräte- und Motorkennline zurückzukehren. Es ist im Sinne der Erfindung bevorzugt, dass die Drehzahl des Rückkehrpunkts kleiner als die Drehzahl des Knickpunkts der nächsthöheren Geräte- und Motorkennline ist. Der Rückkehrpunkt kann beispielsweise von dem Hersteller der Werkzeugmaschine festgelegt werden und in der Werkzeugmaschine oder seiner Steuervorrichtung hinterlegt sein. Der Rückkehrpunkt einer Geräte- und Motorkennline wird vorzugsweise von einem Drehmoment und einer Drehzahl festgelegt, wobei Drehmomentwert des Rückkehrpunkt einer Geräte- und Motorkennlinie beispielsweise als 70 % des Drehmomentwerts des Knickpunkts der entsprechenden Geräte- und Motorkennlinie festgelegt werden kann. Wenn zum Beispiel das Drehmoment des Knickpunkts der dritten Geräte- und Motorkennlinie bei 100 Newtonmeter (Nm) liegt, kann das Drehmoment des Rückkehrpunkts der dritten Geräte- und Motorkennlinie bei 70 Nm liegen.

Vorzugsweise wird die erste Geräte- und Motorkennlinie durch Wertepaare (M1, n1) gebildet wird und die zweite Geräte- und Motorkennlinie durch Wertepaare (M2, n2) gebildet wird, wobei die Drehzahl n1 im ersten Bereich der ersten Geräte- und Motorkennlinie größer ist als die Drehzahl n2 im ersten Bereich der zweiten der ersten Geräte- und Motorkennlinie.

Es ist im Sinne der Erfindung bevorzugt, dass die Geräte- und Motorkennlinien von oben nach unten durchnummeriert werden. Die Formulierung "von oben nach unten" bezieht sich auf die Drehzahl-Drehmoment-Auftragung, wie sie beispielsweise in Fig. 2 dargestellt ist. Die Formulierung "von oben nach unten" bedeutet im Sinne der Erfindung bevorzugt, dass die Geräte- und Motorkennlinien von einem oberen Bereich der Auftragung in Richtung eines unteren Bereichs der Auftragung durchnummeriert werden. Vorzugsweise wird die oberste in Figur 2 dargestellte Geräte- und Motorkennlinie als "erste Geräte- und Motorkennlinie" bezeichnet, während die unterste Geräte- und Motorkennlinie als "dritte Geräte- und Motorkennlinie" bezeichnet wird. Der Wechsel von einer anfänglichen in eine nächsthöhere Geräte- und Motorkennlinie kann also beispielsweise von der ersten in die zweite Geräte- und Motorkennlinie erfolgen oder von der zweiten in die dritte Geräte- und Motorkennlinie.

In Figur 2 sind beispielsweise drei beispielhafte Geräte- und Motorkennlinien abgebildet, wobei die erste Geräte- und Motorkennlinie die Geräte- und Motorkennlinie mit der höchsten Drehzahl n1 im ersten Bereich darstellt und wobei die dritte Geräte- und Motorkennlinie von den drei abgebildeten Geräte- und Motorkennlinien diejenige Geräte- und Motorkennlinie mit der niedrigsten im Wesentlichen konstanten Drehzahl im ersten Bereich ist. Die Nummerierung der Geräte- und Motorkennlinien und die im Wesentlichen konstanten Drehzahlen im ersten Bereich der Geräte- und Motorkennlinien verhalten sich vorzugsweise entgegensetzt zueinander, d.h. eine Geräte- und Motorkennlinie mit einer niedrigen Nummer, zum Beispiel die erste Geräte- und Motorkennlinie, wird durch eine höhere Drehzahl n1 charakterisiert als eine Geräte- und Motorkennlinie mit einer höheren Nummer, beispielsweise die zweite Geräte- und Motorkennlinie, die im ersten Bereich die Drehzahl n2 aufweist. Es gilt vorzugsweise n1 > n2 oder allgemein n_i > n_i+1. Der Wechsel von der ersten in die zweite Geräte- und Motorkennlinie wird im Sinne der Erfindung vorzugsweise als Wechsel in eine (nächst-)höhere Geräte- und Motorkennlinie bezeichnet, obwohl dieser Wechsel mit einer Reduzierung der Drehzahl n verbunden ist, denn n1 > n2.

Die Werteparte (M/n) werden vorzugsweise von je einem Wert für ein Drehmoment M und von einem Wert für die Drehzahl n gebildet. Der Index "1" bezeichnet dabei die Zugehörigkeit zu einer ersten Geräte- und Motorkennlinie, während der Index "2" die Zugehörigkeit zu einer zweite Geräte- und Motorkennlinie kennzeichnet. Vorzugsweise kann je ein Paar aus einem Drehmoment M und einer Drehzahl n einen Punkt in einer Drehzahl-Drehmoment-Auftragung darstellen, wobei die Menge der Punkte in dieser Drehzahl-Drehmoment-Auftragung eine Gerätekennlinie bildet. Die Punkte der Gerätekennlinie können im Sinne der Erfindung bevorzugt auch als Betriebspunkte der Werkzeugmaschine bezeichnet werden, wobei jeder Betriebspunkt durch ein Paar aus einem Drehmoment M und einer Drehzahl n bzw. durch eine Kombination von Betriebsparametern umfassend mindestens ein Drehmoment M und eine Drehzahl n festgelegt wird.

Es ist im Sinne der Erfindung bevorzugt, dass die Gerätekennlinie eine Relation zwischen der Drehzahl n und dem Drehmoment M der Werkzeugmaschine darstellt. Die Gerätekennlinie kann in einer Drehzahl-Drehmoment-Auftragung dargestellt werden, wobei das Drehmoment M auf der x-Achse und die Drehzahl n auf der y-Achse der entsprechenden Auftragung aufgetragen wird. Es ist im Sinne der Erfindung bevorzugt, dass die Drehzahl n die Drehzahl des Motors und/oder die Drehzahl des Werkzeugs der Werkzeugmaschine darstellt. Bei der Arbeit mit der Werkzeugmaschine bewegt sich der Nutzer bevorzugt dynamisch auf der Gerätekennlinie, wobei der aktuelle Arbeitspunkt durch eine Wertepaar n/M aus Drehzahl und Drehmoment auf der Gerätekennlinie angegeben wird. Es ist im Sinne der Erfindung bevorzugt, dass eine Gerätekennlinie eine Menge an Wertepaaren n/M aus Drehzahl und Drehmoment umfasst. Mit anderen Worten wird die Gerätekennlinie von einer Menge an Drehzahl-/Drehmoment-Wertepaaren gebildet, wobei jedem Arbeitspunkt der Werkzeugmaschine ein konkreter Drehzahlwert n und ein konkreter Drehmomentwert M zugeordnet werden kann.

Die Drehzahl kann beispielsweise in der Einheit rounds per minute (rpm) angegeben werden. Die Drehzahl entspricht vorzugsweise der Drehgeschwindigkeit des Motors bzw. der Motorwelle der Werkzeugmaschine. Mit dem Begriff «Drehzahl» kann auch die Drehzahl des Werkzeugs der Werkzeugmaschine beschreiben. Das Drehmoment M wird im Sinne der Erfindung vorzugsweise in der Einheit Newtonmeter (Nm) angegeben.

Es ist im Sinne der Erfindung ganz besonders bevorzugt, dass das Umschalten zwischen den Geräte- und Motorkennlinien im Kontext der Erfindung automatisch erfolgt. Das bedeutet im Sinne der Erfindung bevorzugt, dass die Einstellung nicht mehr manuell durch einen Nutzer erfolgen muss, sondern automatisch von der Werkzeugmaschine oder ihrer Steuervorrichtung vorgenommen wird. Durch die bevorzugt automatische Einstellung der Geräte- und Motorkennlinien kann vorteilhafterweise die Fehlerquelle "Mensch" umgangen werden und die Einstellung der Betriebsparameter kann auf Basis von erhobenen Daten erfolgen und dadurch objektiviert werden. Tests haben gezeigt, dass auf diese Weise die Anzahl von Fehleinstellungen von Betriebsparametern erheblich reduziert werden kann. Mit der Erfindung kann insbesondere eine optimale Leistung der Werkzeugmaschine bei geringstmöglichem Eingriff durch den Anwender erreicht werden. Darüber hinaus kann ein Stillstand bzw. Blockieren des Werkzeugs der Werkzeugmaschine wirksam verhindert werden.

Bei der Umstellung von einer ersten Geräte- bzw. Motorkennlinie zu einer zweiten Geräte- bzw. Motorkennlinie können vorzugsweise auch die entsprechenden Kombinationen von Drehzahlen und Drehmomenten geändert werden. Wie aus Figur 2 beispielhaft hervorgeht, können im Kontext der Erfindung verschiedene Geräte- bzw. Motorkennlinie von der Werkzeugmaschine eingestellt werden. Dabei sind in Figur 2 exemplarisch drei Geräte- bzw. Motorkennlinien abgebildet. Die Geräte- bzw. Motorkennlinien sind jeweils durch einen ersten Bereich gekennzeichnet, in dem die Drehzahl n, die auf der y-Achse aufgetragen ist, nach oben begrenzt ist, obwohl das Drehmoment M, das auf der x-Achse aufgetragen ist, stetig ansteigt. Ein solcher Fall kann beispielsweise auftreten, wenn der Nutzer der Werkzeugmaschine die Werkzeugmaschine selbst bzw. ihr Werkzeug sehr stark in den zu bearbeitenden Untergrund drückt. In diesem ersten Bereich der Geräte- bzw. Motorkennlinie greift vorzugsweise eine Drehzahlbegrenzung, die dafür sorgt, dass die Drehzahl n der Werkzeugmaschine trotz steigendem Drehmoment M im Wesentlichen konstant bleibt.

Bei noch weiter ansteigendem Drehmoment M kann der sogenannte «Knickpunkt» der Geräte- bzw. Motorkennlinie erreicht oder sogar überschritten werden. In einigen Fällen kann die Werkzeugmaschine dadurch «abgewürgt» werden, wenn das Drehmoment M weiter zunimmt und die Drehzahl n nach Überschreiten des Knickpunktes rapide abnimmt, beispielweise bis zu einem Geräte-Stillstand und einer Drehzahl n = 0 rpm. Der Knickpunkt der Geräte- bzw. Motorkennlinie markiert vorzugsweise den Übergang zwischen dem ersten Bereich der Geräte- bzw. Motorkennlinie, in dem die Drehzahl n im Wesentlichen konstant ist und das Drehmoment M kontinuierlich ansteigt, während im zweiten Bereich der Geräte- bzw. Motorkennlinie das Drehmoment M weiter ansteigen kann, aber die Drehzahl n rasch absinkt.

Ein solches Verhalten der Werkzeugmaschine, d.h. wenn die Werkzeugmaschine nur einer einzigen Geräte- bzw. Motorkennlinie folgen kann, kann aber mit mehreren Nachteilen behaftet sein. Beispielsweise kann der starke Abfall der Drehzahl n von dem Nutzer als sehr überraschend wahrgenommen werden, wenn die Geräte- bzw. Motorkennlinie im zweiten Bereich sehr steil ausgebildet ist, d.h. wenn die Drehzahl n in Abhängigkeit vom Drehmoment M sehr schnell abnimmt. Außerdem kann ein solcher sehr steiler Verlauf der Geräte- bzw. Motorkennlinie im zweiten Bereich nachteiligerweise auch zu einem Verklemmen des Werkzeugs der Werkzeugmaschine im Untergrund führen. Wenn die Werkzeugmaschine als Kernbohrgerät ausgebildet ist, kann beispielsweise die Bohrkrone im zu bearbeitenden Untergrund verklemmt werden, wenn ihre Drehzahl n sehr schnell abfällt.

Um diese Nachteile zu überwinden, wird im Kontext der vorliegenden Erfindung vorgeschlagen, von einer anfänglichen Geräte- bzw. Motorkennlinie in eine nächsthöhere Geräte- bzw. Motorkennlinie, beispielsweise die zweite Geräte- bzw. Motorkennlinie, zu wechseln, so dass der Betrieb der Werkzeugmaschine dann gemäß der zweiten Geräte- bzw. Motorkennlinie erfolgt. Beispielsweise kann der Betrieb der Werkzeugmaschine gemäß einer ersten Geräte- bzw. Motorkennlinie die Verwendung eines ersten Parametersatz von Betriebsparametern umfassen, wobei der erste Parametersatz zumindest eine erste Drehzahl n1 und ein erstes Drehmoment M1 umfasst. Analog dazu kann der Betrieb der Werkzeugmaschine gemäß einer zweiten Geräte- bzw. Motorkennlinie die Verwendung eines zweiten Parametersatz von Betriebsparametern umfassen, wobei der zweite Parametersatz zumindest eine zweite Drehzahl n2 und ein zweites Drehmoment M2 umfasst. Der Wechsel von der einen Geräte- bzw. Motorkennlinie zu der anderen Geräte- bzw. Motorkennlinie erfolgt dabei bei Erreichen eines Knickpunktes der aktuellen Geräte- bzw. Motorkennlinie, d.h. derjenigen Geräte- bzw. Motorkennlinie, gemäß der die Werkzeugmaschine gerade betrieben wird.

Es ist im Sinne der Erfindung bevorzugt, dass die zweite Geräte- bzw. Motorkennlinie durch eine im Vergleich zur ersten Geräte- bzw. Motorkennlinie kleines Drehzahl n gekennzeichnet ist, wobei die Drehzahl n aber - trotz steigendem Drehmoment M - auch im Wesentlichen konstant verläuft. Darüber hinaus ist die zweite Geräte- bzw. Motorkennlinie dadurch gekennzeichnet, dass ihr Knickpunkt im Vergleich zum Knickpunkt der ersten Geräte- bzw. Motorkennlinie zu einem höheren Drehmoment M verschoben ist. Die zweite Geräte- bzw. Motorkennlinie ist darüber hinaus dadurch gekennzeichnet, dass sie im zweiten Bereich, d.h. nach Überschreiten des Knickpunkts, weniger steil abfällt als die erste Geräte- bzw. Motorkennlinie.

Die unterschiedlichen Geräte- bzw. Motorkennlinien weisen vorzugsweise eine ähnliche Form auf, indem sie jeweils einen ersten Bereich und einen zweiten Bereich aufweisen. Die ersten und zweiten Bereiche der Geräte- bzw. Motorkennlinien sind durch sogenannte Knickpunkte voneinander getrennt, wobei der Knickpunkt der ersten Geräte- bzw. Motorkennlinie vorzugsweise als erster Knickpunkt K1 bezeichnet wird, der Knickpunkt der zweiten Geräte- bzw. Motorkennlinie vorzugsweise als zweiter Knickpunkt K2 bezeichnet wird und so weiter. Der erste Bereich der Geräte- bzw. Motorkennlinien ist vorzugsweise durch eine im Wesentlichen konstant verlaufende Drehzahl n gekennzeichnet, sowie durch ein ansteigendes Drehmoment M. Vorzugsweise und wie aus Figur 2 ersichtlich ist, verlaufen die möglichen Geräte- bzw. Motorkennlinien im ersten Bereich im Wesentlichen parallel. Das bedeutet im Sinne der Erfindung bevorzugt, dass das Drehmoment M gleichermaßen ansteigt, während die Drehzahlen n bei jeder Geräte- bzw. Motorkennlinie auf eine andere im Wesentlichen konstante Drehzahl n begrenzt sind. Nach Überschreiten des Knickpunkts beginnt der zweite Bereich der Geräte- bzw. Motorkennlinie. In diesem zweiten Bereich kann das Drehmoment M weiter ansteigen, während die Drehzahl n rasch abfällt. Dieser Abfall ist bei der ersten Geräte- bzw. Motorkennlinie vorzugsweise steiler als bei der zweiten Geräte- bzw. Motorkennlinie und bei der zweiten Geräte- bzw. Motorkennlinie steiler als bei der dritten Geräte- bzw. Motorkennlinie und so weiter.

Es ist im Kontext der vorliegenden Erfindung vorgesehen, dass der Wechsel von der ersten Geräte- bzw. Motorkennlinie auf die zweite Geräte- bzw. Motorkennlinie dann erfolgt, wenn der Knickpunkt der ersten Geräte- bzw. Motorkennlinie erreicht wird.

Es ist im Sinne der Erfindung bevorzugt, dass bei Erreichen eines i-ten Knickpunktes ein Wechsel von der n-ten Geräte- bzw. Motorkennlinie auf die (i+1)-te Geräte- bzw. Motorkennlinie erfolgt. Dieser Wechsel erfolgt vorzugsweise automatisch, d.h. ohne Zutun des Nutzers der Werkzeugmaschine. Durch den Wechsel von der i-ten auf die (i+1)-te Geräte- bzw. Motorkennlinie wird vorzugsweise die Drehzahl von dem im Wesentlichen konstanten Drehzahlwert des ersten Bereichs der i-ten Geräte- bzw. Motorkennlinie auf den im Wesentlichen konstanten Drehzahlwert des ersten Bereichs der (i+1)-ten Geräte- bzw. Motorkennlinie umgestellt. Vorzugsweise ist die im Wesentlichen konstante Drehzahl n_i der i-ten Geräte- bzw. Motorkennlinie größer als die im Wesentlichen konstante Drehzahl n_i+1 der (i+1)-ten Geräte- bzw. Motorkennlinie, d.h. n_i > n_i+1. Nach dem Wechsel der Geräte- bzw. Motorkennlinie arbeitet die Werkzeugmaschine dadurch vorzugsweise mit einer geringeren Drehzahl, wobei das Drehmoment gemäß der dann eingestellt neuen Geräte- bzw. Motorkennlinie weiter ansteigen kann, bevor der Knickpunkt der (i+1)-ten Geräte- bzw. Motorkennlinie erreicht wird, denn im Kontext der vorliegenden Erfindung sind die Knickpunkte der der nächsthöheren Geräte- bzw. Motorkennlinien vorzugsweise in Richtung eines höheren Drehmoments verschoben (vgl. Figur 2).

Durch dieses Vorgehen kann der Nutzer zwar eine Änderung, insbesondere Reduzierung der Drehzahl der Werkzeugmaschine wahrnehmen, wenn die Werkzeugmaschine von einer anfänglichen in eine nächsthöhere Geräte- bzw. Motorkennlinie wechselt. Allerdings wird diese Änderung der Drehzahl der Werkzeugmaschine weniger unangenehm wahrgenommen als der abrupte, rasche Abfall der Geräte- bzw. Motorkennlinie, zu dem es im zweiten Bereich der Geräte- bzw. Motorkennlinien kommen kann, wenn der Knickpunkt einer Geräte- bzw. Motorkennlinie überschritten wird. Vielmehr wird durch die Erfindung vorteilhafterweise ein Überschreiten des Knickpunkts einer Geräte- bzw. Motorkennlinie dadurch vermieden, dass bei Erreichen des Knickpunkts in eine nächsthöhere Geräte- bzw. Motorkennlinie gewechselt wird, bei der die Drehzahl n geringer und das Drehmoment M vorzugsweise zu einem höheren Wert verschoben ist. Dadurch wird vorteilhafterweise auch die Gefahr eines Verklemmens des Werkzeugs der Werkzeugmaschine erheblich verringert, da ein Erreichen des zweiten Bereichs einer Geräte- bzw. Motorkennlinie und der damit verbundene steile Abfall der Drehzahl n wirksam verhindert wird. Das Erreichen des zweiten Bereichs einer Geräte- bzw. Motorkennlinie wird insbesondere dadurch verhindert, dass bei Erreichen des Knickpunkts als Grenze zwischen dem ersten und dem zweiten Bereich einer Geräte- bzw. Motorkennlinie ein Wechsel stattfindet von einer ursprünglichen Geräte- bzw. Motorkennlinie zu einer nächsthöheren Geräte- bzw. Motorkennlinie.

Es ist im Sinne der Erfindung bevorzugt, dass die Werkzeugmaschine dazu eingerichtet ist, automatisch von einer ersten Geräte- bzw. Motorkennlinie auf eine zweite Geräte- bzw. Motorkennlinie und dann weiter zu einer dritten Geräte- bzw. Motorkennlinie zu wechseln. Allerdings kann es im Sinne der Erfindung auch bevorzugt sein, dass die Werkzeugmaschine ausgehend von einem Betrieb der zweiten Geräte- bzw. Motorkennlinie auf einen Betrieb gemäß der ersten Geräte- bzw. Motorkennlinie zurückgeschaltet.

In einer bevorzugten Ausgestaltung der Erfindung kann der Wechsel zwischen den Geräte- bzw. Motorkennlinien auch dadurch bewirkt werden, dass der Nutzer einen Anpressdruck auf die Werkzeugmaschine erhöht oder verringert. Wenn der Nutzer die Werkzeugmaschine beispielsweise sehr stark in den zu bearbeitenden Unterdruck drückt, kann die das Drehmoment M zunehmen, obwohl die Drehzahl n konstant bleibt. Dadurch kann der Knickpunkt der Geräte- bzw. Motorkennlinie erreicht werden, der vorzugsweise zum Umschalten zwischen den einzelnen Geräte- bzw. Motorkennlinien führen kann.

Wenn zum Beispiel die Werkzeugmaschine bzw. ihr Werkzeug auf ein Armierungs- oder Bewehrungseisen in Beton trifft, kann es wünschenswert sein, dass die Werkzeugmaschine in der Lage ist, ein höheres Drehmoment M bereitzustellen, um das Armierungseisen zu durchtrennen. Die Bearbeitung von reinem Beton erfolgt vorzugsweise mit einer hohen Drehzahl n der Bohrkrone und einem geringen Drehmoment M. Wenn die Werkzeugmaschine einen Armierungstreffer feststellt, ist es im Sinne der Erfindung bevorzugt, auf eine Geräte- bzw. Motorkennlinie mit höherem Drehmoment M und niedrigerer Drehzahl n zu wechseln. Dies kann im Sinne der Erfindung bevorzugt dadurch erreicht werden, dass die Werkzeugmaschine zu einer höheren Geräte- bzw. Motorkennlinie wechselt, also beispielsweise von der ersten zu der zweiten Geräte- bzw. Motorkennlinie oder von der zweiten zu der dritten Geräte- bzw. Motorkennlinie.

Darüber hinaus kann es bei fortschreitender Tiefe einer Bohrung wünschenswert sein, die Werkzeugmaschine mit einem höheren Drehmoment M zu betrieben, da aufgrund der Wandreibung höhere Kräfte erforderlich sein können, um einen Bohrfortschritt zu erzielen. Vorzugsweise kann die Werkzeugmaschine bei geringen Bohrtiefen zu einer Geräte- bzw. Motorkennlinie mit höheren Drehzahlen n und geringeren Drehmomenten M wechseln, während die Werkzeugmaschine bei tiefen Bohrungen mit einer Geräte- bzw. Motorkennlinie arbeitet, die vergleichsweise niedrige Drehzahlen n, aber höhere Drehmomente M aufweist. Dies kann im Sinne der Erfindung bevorzugt dadurch erreicht werden, dass die Werkzeugmaschine bei tiefer werdenden Bohrungen zu einer höheren Geräte- bzw. Motorkennlinie wechselt, also beispielsweise von der ersten zu der zweiten Geräte- bzw. Motorkennlinie oder von der zweiten zu der dritten Geräte- bzw. Motorkennlinie.

Es ist im Sinne der Erfindung bevorzugt, dass ein Drehmomentwert des Knickpunkts K1 der ersten Geräte- und Motorkennline größer ist als ein Drehmomentwert des Rückkehrpunkts RP2 der zweiten Geräte- und Motorkennline. Mit anderen Worten bzw. allgemein gesprochen bedeutet dies im Sinne der Erfindung, dass ein Drehmomentwert des Knickpunkts K_i der i-ten Geräte- und Motorkennline KL_i größer ist als ein Drehmomentwert des Rückkehrpunkts RP_i+1 der (i+1)-ten Geräte- und Motorkennline KL_i+1. Es ist somit im Sinne der Erfindung bevorzugt, dass der Drehmomentwert des Knickpunkts K1 eine anfänglichen oder ursprünglichen Geräte- und Motorkennline größer ist als ein Drehmomentwert des Rückkehrpunkts der nächsthöheren Geräte- und Motorkennline der Werkzeugmaschine. Wenn beispielsweise der Knick- oder Umschaltpunkt der ersten Geräte- und Motorkennline bei 80 Nm liegt, ist es im Sinne der Erfindung bevorzugt, dass der Drehmomentwert des Rückkehrpunkts der zweiten Geräte- und Motorkennline einen Wert kleiner als 80 Nm annimmt, also beispielsweise 75 Nm oder 70 Nm. Es ist im Sinne der Erfindung auch bevorzugt, dass ein Drehmomentwert des Knickpunkts K2 der zweiten Geräte- und Motorkennline größer ist als ein Drehmomentwert des Rückkehrpunkts RP2 der zweiten Geräte- und Motorkennline. Mit anderen Worten weist der Knickpunkt einer Geräte- und Motorkennline vorzugsweise einen größeren oder höheren Drehmomentwert auf als der Rücckehrpunkt derselben Geräte- und Motorkennline. Wenn beispielsweise der Knickpunkt der zweiten Geräte- und Motorkennline einen Drehmomentwert von 80 Nm aufweist, ist es im Sinne der Erfindung auch bevorzugt, dass der Drehmomentwert des Rückkehrpunkts der zweiten Geräte- und Motorkennline bei einem Wert von kleiner als 80 Nm liegt, also beispielsweise bei 60 oder 50 Nm.

Beim Wechsel von einer Geräte- und Motorkennline zu einer nächsthöheren Geräte- und Motorkennline kann der Betrieb der Werkzeugmaschine in der nächsthöheren Geräte- und Motorkennline bei dem Drehmomentwert des Knickpunkts der ursprünglichen oder zuvor verwendeten Geräte- und Motorkennline fortgesetzt werden. Wenn beispielsweise der Knickpunkt der ersten Geräte- und Motorkennline bei 80 Nm liegt, kann es im Sinne der Erfindung bevorzugt sein, dass der Betrieb der Werkzeugmaschine mit einem Drehmomentwert von 80 Nm fortgesetzt wird, wenn die Werkzeugmaschine von der ersten in die zweite Geräte- und Motorkennline wechselt. Die Fortsetzung des Betriebs der Werkzeugmaschine mit im Wesentlichen gleichen Drehmoment kann beispielsweise dadurch erreicht werden, dass die Werkzeugmaschine mit im Wesentlichen konstanten Anpressdruck bzw. Anpresskraft auf den zu bearbeitenden Unterdruck gedrückt wird.

Es kann im Sinne der Erfindung allerdings auch bevorzugt sein, dass der Betrieb der Werkzeugmaschine in der nächsthöheren Geräte- und Motorkennline bei einem anderen Drehmomentwert fortgesetzt, der nicht dem Drehmomentwert des Knickpunkts der ursprünglichen oder zuvor verwendeten Geräte- und Motorkennline entspricht. Dieser Drehmomentwert, mit dem der Betrieb der Werkzeugmaschine in der nächsthöheren Geräte- und Motorkennlinie fortgesetzt wird, kann beispielsweise höher oder niedriger sein als der Drehmomentwert des Knickpunkts der ursprünglichen oder zuvor verwendeten Geräte- und Motorkennline. Es ist im Sinne der Erfindung besonders bevorzugt, dass der Betrieb der Werkzeugmaschine nach einem Wechsel in eine nächsthöheren Geräte- und Motorkennline mit einem höheren Drehmomentwert als dem Drehmomentwert des Knickpunkts der ursprünglichen oder zuvor verwendeten Geräte- und Motorkennline fortgesetzt wird. Wenn beispielsweise der Knickpunkt der ersten Geräte- und Motorkennline bei 80 Nm liegt, kann es im Sinne der Erfindung bevorzugt sein, dass der Betrieb der Werkzeugmaschine mit einem Drehmomentwert von 90 Nm fortgesetzt wird, wenn die Werkzeugmaschine von der ersten in die zweite Geräte- und Motorkennline wechselt. Die Fortsetzung des Betriebs der Werkzeugmaschine mit größerem Drehmoment kann beispielsweise dadurch erreicht werden, dass die Werkzeugmaschine einer höheren Anpresskraft auf den zu bearbeitenden Unterdruck gedrückt wird.

In einem weiteren Aspekt betrifft die Erfindung eine Werkzeugmaschine zur Durchführung des vorgeschlagenen Verfahrens zum Betrieb einer Werkzeugmaschine. Die für das Betriebsverfahren eingeführten Begriffe, Definitionen und technischen Vorteile gelten vorzugsweise für die Werkzeugmaschine analog. Die Werkzeugmaschine ist dadurch gekennzeichnet, dass die Werkzeugmaschine als Bohrgerät ausgebildet ist, vorzugsweise als Kembohrgerät, so dass der Arbeitsfortschritt ein Bohrfortschritt ist und/oder ein Werkzeug der Werkzeugmaschine eine Bohrkrone ist. Es ist im Sinne der Erfindung bevorzugt, dass die Werkzeugmaschine dazu eingerichtet ist, bei Erreichen eines zweiten Rückkehrpunkts von der zweiten Geräte- und Motorkennline zur ersten Geräte- und Motorkennline zurückzukehren. Allgemein gesprochen ist es im Sinne der Erfindung bevorzugt, dass die Werkzeugmaschine dazu eingerichtet ist, bei Erreichen eines Rückkehrpunkts von einer höheren Geräte- und Motorkennline zu einer niedrigeren Geräte- und Motorkennline zurückzukehren. Beispielsweise kann die Werkzeugmaschine von der dritten Geräte- und Motorkennline zu der zweiten Geräte- und Motorkennline zurückkehren oder von der zweiten Geräte- und Motorkennline zu der ersten Geräte- und Motorkennline. Es ist im Sinne der Erfindung bevorzugt, dass die Drehzahl des Rückkehrpunkts kleiner als die Drehzahl des Knickpunkts der nächsthöheren Geräte- und Motorkennline ist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer beispielhaften Ausgestaltung einer Werkzeugmaschine
- Fig. 2: Beispielhafte Darstellung von Geräte- und Motorkennlinien in einer Drehzahl-Drehmoment-Auftragung
- Fig. 3: alternative Darstellung von Geräte- und Motorkennlinien in einer Drehzahl-Drehmoment-Auftragung

### Ausführungsbeispiel und Figurenbeschreibung:

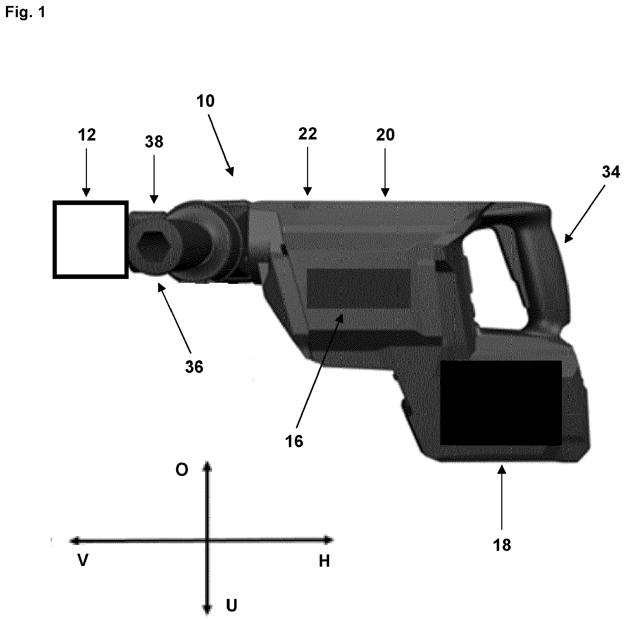

Figur 1 zeigt eine beispielhafte Ausgestaltung einer Werkzeugmaschine 10. Die Werkzeugmaschine 10 kann als Bohrgerät, insbesondere als Kernbohrgerät, ausgebildet sein und als Werkzeug 12 eine Bohrkrone aufweisen (schematisch dargestellt). Das Werkzeug 12 kann mit Hilfe einer Werkzeugaufnahme 38 an der Werkzeugmaschine 10 befestigt werden. Das Werkzeug 12 der Werkzeugmaschine 10 ist vorzugsweise dazu eingerichtet, eine Drehbewegung auszuführen, wobei das Werkzeug 12 von einem Motor 16 der Werkzeugmaschine 10 zu der Drehbewegung angetrieben werden kann. Die Energieversorgung der Werkzeugmaschine 10 kann über eine Energieversorgungsvorrichtung 18 erfolgen, die beispielsweise als wiederaufladbare Batterie ausgebildet sein kann. Die Werkzeugmaschine 10 kann verschiedene Handgriffe 34, 36 aufweisen, wobei die Werkzeugmaschine 10, die als Ausführungsbeispiel der Erfindung in Figur 1 abgebildet ist, einen hinteren Handgriff 34 aufweist, sowie einen vorderen Handgriff 36. Der vordere Handgriff 36 kann beispielsweise drehbar ausgebildet sein, so dass der vordere Handgriff 36 beispielsweise zur Seite abstehen oder sich in eine Raumrichtung «nach unten» erstrecken kann. Die Raumrichtungen «oben O», «unten U», «vorne V» und «hinten H» sind in den Figuren durch Richtungskreuze angegeben. Wenn die Werkzeugmaschine 10 - wie in Figur 1 - horizontal gehalten wird, um beispielsweise eine Bohrung in einer Mauer oder in einer Wand durchzuführen, entspricht die Arbeitsrichtung vorzugsweise der Raumrichtung «nach vorne V».

Die Werkzeugmaschine 10 kann ein Gehäuse 20 umfassen, das beispielsweise den Motor 16 und/oder die Energieversorgungsvorrichtung 18 der Werkzeugmaschine 10 umfasst. Das Gehäuse 20 kann ein- oder mehrteilig ausgebildet sein, wobei das in Figur 1 abgebildete Gehäuse 20 in dem Sinne zweiteilig ausgebildet ist, dass es ein Motorgehäuse und ein Batterie-Gehäuse umfasst, wobei das Motorgehäuse dazu eingerichtet ist, den Motor 16 der Werkzeugmaschine 16 aufzunehmen und wobei das Batterie-Gehäuse dazu eingerichtet ist, die Energieversorgungsvorrichtung 18 der Werkzeugmaschine 10 aufzunehmen.

Figur 2 zeigt eine bespielhafte Darstellung von Geräte- und Motorkennlinien KL in einer Drehzahl-Drehmoment-Auftragung. Auf der x-Achse der Drehzahl-Drehmoment-Auftragung ist das Drehmoment M aufgetragen, das in der Einheit Newtonmeter (Nm) angegeben wird. Auf der y-Achse der Drehzahl-Drehmoment-Auftragung ist die Drehzahl n aufgetragen, die in der Einheit rounds per minute (rpm) angegeben wird. In der in Figur 2 abgebildeten Drehzahl-Drehmoment-Auftragung sind beispielsweise drei Geräte- und Motorkennlinien KL abgebildet. Die oberste der drei Geräte- und Motorkennlinien KL wird als erste Geräte- und Motorkennlinie KL1 bezeichnet, die mittlere Geräte- und Motorkennlinie KL als zweite Geräte- und Motorkennlinie KL2 und die unterste Geräte- und Motorkennlinie KL als dritte Geräte- und Motorkennlinie KL3. Die Geräte- und Motorkennlinien KL weisen jeweils einen Knickpunkt K auf, wobei die Knickpunkte K die Geräte- und Motorkennlinien KL jeweils in einen ersten Bereich I und einen zweiten Bereich II aufteilen. Auf der linken Seite des Knickpunkts K liegt jeweils der erste Bereich I der Geräte- und Motorkennlinie KL vor, während auf der rechten Seite des Knickpunkts K der zweite Bereich II der Geräte- und Motorkennlinie KL vorliegt. Der erste Bereich I der Geräte- und Motorkennlinien KL ist dadurch gekennzeichnet, dass hier die Drehzahl n im Wesentlichen konstant verläuft, d.h. einen im Wesentlichen gleichbleibenden Wert annimmt. Während die Drehzahl n in diesem ersten Bereich I der Geräte- und Motorkennlinien KL im Wesentlichen begrenzt ist und konstant verläuft, kann das Drehmoment M stetig weiter zunehmen. Dabei ist die Drehzahl n bei der ersten Geräte- und Motorkennlinie KL1 größer, d.h. sie nimmt einen größeren Wert an, als bei der zweiten Geräte- und Motorkennlinie KL2 und die Drehzahl n bei der zweiten Geräte- und Motorkennlinie KL2 ist größer als bei der dritten Geräte- und Motorkennlinie KL3.

Im Bereich des Knickpunkts K kommt es zu einer erheblichen Änderung des Verhaltens der Werkzeugmaschine 10, wobei diese Änderung des Verhaltens der Werkzeugmaschine 10 insbesondere den zweiten Bereich II der Geräte- und Motorkennlinien KL markiert. In dem zweiten Bereich II der Geräte- und Motorkennlinien KL kann das Drehmoment M weiter ansteigen, während die Drehzahl n rasch abfällt. Dabei ist der Abfall der Drehzahl n bei der ersten Geräte- und Motorkennlinie KL1 stärker ausgeprägt als bei der zweiten Geräte- und Motorkennlinie KL2 und der Abfall der Drehzahl n bei der zweiten Geräte- und Motorkennlinie KL2 ist stärker ausgeprägt als bei der dritten Geräte- und Motorkennlinie KL3. Die Knickpunkte K sind mit aufsteigender Kennlinien-Zahl zu größeren Drehmomenten M hin verschoben, d.h. ein Drehmomentwert des dritten Knickpunkts K3 ist größer als ein Drehmomentwert des zweiten Knickpunkts K2 und ein Drehmomentwert des zweiten Knickpunkts K2 ist größer als ein Drehmomentwert des ersten Knickpunkts K1.

Es ist im Kontext der vorliegenden Erfindung vorgesehen, dass die Werkzeugmaschine 10 in die nächsthöhere Geräte- und Motorkennlinie KL wechselt, wenn der Knickpunkt K der aktuellen Geräte- und Motorkennlinie KL erreicht wird. Wenn die Werkzeugmaschine 10 beispielsweise gemäß der ersten Geräte- und Motorkennlinie KL1 betrieben wird und die Werkzeugmaschine 10 stark auf den zu bearbeitenden Unterdruck gedrückt wird, kann das Drehmoment M immer weiter ansteigen, bis der erste Knickpunkt K1 erreicht wird. Um einen Stillstand oder ein Blockieren des Werkzeugs 12 der Werkzeugmaschine 10 zu vermeiden, schaltet die Werkzeugmaschine 10 bevorzugt automatisch in die nächsthöhere Geräte- und Motorkennlinie KL2. Dadurch fällt die Drehzahl der Werkzeugmaschine 10 zunächst auf den niedrigeren Wert der zweiten Geräte- und Motorkennlinie KL2, aber durch den Wechsel der Geräte- und Motorkennlinie KL wird verhindert, dass nach Erreichen des ersten Knickpunkts K1 die Werkzeugmaschine 10 im zweiten Bereich II der ersten Geräte- und Motorkennlinie KL1 arbeitet, in dem die Drehzahl n sehr schnell abfallen kann. Ein solcher rascher Abfall der Drehzahl n kann von dem Nutzer der Werkzeugmaschine 10 als sehr unangenehm oder überraschend empfunden werden. Es stellt einen besonderen Vorteil der vorliegenden Erfindung dar, dass durch das vorgeschlagene Verfahren der Eintritt der Werkzeugmaschine 10 in den zweiten Bereich II der Geräte- und Motorkennlinie KL wirksam verhindert wird, indem die Werkzeugmaschine 10 bei Erreichen des Knickpunkts K der aktuell für den Betrieb der Werkzeugmaschine 10 maßgeblichen Geräte- und Motorkennlinie KL bevorzugt automatisch in die nächsthöhere Geräte- und Motorkennlinie KL wechselt, also beispielsweise von der ersten in die zweite Geräte- und Motorkennlinie oder von der zweiten in die dritte Geräte- und Motorkennlinie KL.

Die Werkzeugmaschine 10 kann auch von einer höheren Geräte- und Motorkennlinie KL in eine niedrigere Geräte- und Motorkennlinie KL wechseln. Dazu können für die zweite, dritte und jede weitere Geräte- und Motorkennlinie KL Rückkehrpunkte RP definiert werden, bei denen die Werkzeugmaschine 10 bevorzugt automatisch in die nächstniedrigere Geräte- und Motorkennlinie KL wechselt, also beispielsweise von der dritten in die zweite Geräte- und Motorkennlinie KL oder von der zweiten in die erste Geräte- und Motorkennlinie KL. Die Rückkehrpunkte RP können beispielsweise von dem Hersteller der Werkzeugmaschine 10 festgelegt und in der Werkzeugmaschine 10 hinterlegt werden. Bei der in Figur 2 dargestellten Drehzahl-Drehmoment-Auftragung weist beispielsweise die zweite Geräte- und Motorkennlinie KL2 einen zweiten Rückkehrpunkt RP2 und die dritte Geräte- und Motorkennlinie KL3 einen dritten Rückkehrpunkt RP3 auf. Beispielsweise kann ein Drehmoment-Wert des dritten Rückkehrpunkts RP3 70 % des Drehmoment-Wertes des dritten Knickpunkts K3 betragen, während ein Drehmoment-Wert des zweiten Rückkehrpunkts RP2 50 % des Drehmoment-Wertes des zweiten Knickpunkts K2 betragen kann. Die Anteile oder Prozentsätze können vorzugsweise für alle Geräte- und Motorkennlinien KL gleich sein oder sie können - wie im Beispiel - unterschiedliche Werte - hier 50 % und 70 % - annehmen.

Figur 3 zeigt eine alternative Darstellung von Geräte- und Motorkennlinien in einer Drehzahl-Drehmoment-Auftragung, bei der die Geräte- und Motorkennlinien KL nicht in zwei Bereiche I, II aufgeteilt sind, sondern die Form einer abfallenden Gerade aufweisen. Der Knickpunkt K der zweigeteilten Geräte- und Motorkennlinien KL, die in Figur 2 dargestellt sind, entspricht in Figur 3 einem Umschaltpunkt, der im Wesentlichen frei auf der Geräte- und Motorkennlinie KL gewählt werden kann. In Figur 3 sind exemplarisch drei Geräte- und Motorkennlinien KL dargestellt, aber selbstverständlich können der Werkzeugmaschine 10 mehr oder weniger als drei Geräte- und Motorkennlinien zur Verfügung bzw. zur Auswahl stehen. Neben den Knickpunkten K, bei denen von einer anfänglichen Geräte- und Motorkennlinie KL_i in eine nächsthöhere Geräte- und Motorkennlinie KL_i+1 gewechselt wird, können die Geräte- und Motorkennlinien KL vorzugsweise auch Rückkehrpunkte RP aufweisen. Bei den Rückkehrpunkten RP kann die Werkzeugmaschine 10 in den Betrieb gemäß einer nächstniedrigeren Geräte- und Motorkennlinie KL_i-1 zurücckehren, wenn der Betrieb der Werkzeugmaschine 10 aktuell gemäß einer Geräte- und Motorkennlinie KL_i gesteuert wird. Beispiele dafür, wie die Knickpunkte K und die Rückkehrpunkte RP der einzelnen Geräte- und Motorkennlinien KL zueinander in Beziehung stehen können, werden weiter oben in der Beschreibung genannt. Im Vergleich zu den zweigeteilten Geräte- und Motorkennlinien KL, die in Figur 2 dargestellt sind, weisen die Geräte- und Motorkennlinien KL, die in Figur 3 dargestellt sind und die Form einer abfallenden Gerade aufweisen, insgesamt einen weniger stark ausgeprägten Abfall der Drehzahl n in Bezug auf das Drehmoment M auf, wie dies die zweigeteilten Geräte- und Motorkennlinien KL in ihrem zweiten Bereich II tun. Mit anderen Worten ist die negative Steigung (d.h. der Abfall) der Geräte- und Motorkennlinien KL in Figur 3 kleiner als die negative Steigung (d.h. der Abfall) der Geräte- und Motorkennlinien KL in Figur 2 in ihrem zweiten Bereich II.

### Bezugszeichenliste

- 10: Werkzeugmaschine
- 12: Werkzeug der Werkzeugmaschine
- 14: Zubehörvorrichtung der Werkzeugmaschine
- 16: Motor der Werkzeugmaschine
- 18: Energieversorgungsvorrichtung der Werkzeugmaschine
- 20: Gehäuse der Werkzeugmaschine
- 22: Sensor an der Werkzeugmaschine
- 30: Bohrständer
- 34: hinterer Handgriff
- 36: vorderer Handgriff
- 38: Werkzeugaufnahme
- KL1: erste Geräte- und Motorkennlinie
- KL2: zweite Geräte- und Motorkennlinie
- KL3: dritte Geräte- und Motorkennlinie
- K1: erster Knickpunkt
- K2: zweiter Knickpunkt
- K3: dritter Knickpunkt
- I: erster Bereich einer Geräte- und Motorkennlinie
- II: zweiter Bereich einer Geräte- und Motorkennlinie
- RP2: zweiter Rückkehrpunkt
- RP3: dritter Rückkehrpunkt
- V: Raumrichtung "nach vorne", Vorderseite
- H: Raumrichtung "nach hinten", Rückseite
- U: Raumrichtung "nach unten", Unterseite
- O: Raumrichtung "nach oben", Oberseite

## Patentansprüche

1. Verfahren zum Betrieb einer Werkzeugmaschine (10), wobei die Werkzeugmaschine (10) gemäß unterschiedlicher Geräte- und Motorkennlinen (KL) betreibbar ist, **umfassend die folgenden Verfahrensschritte:**
a) Betrieb der Werkzeugmaschine (10) gemäß einer ersten Geräte- und Motorkennlinie (KL1),
b) Umschalten von der ersten Geräte- und Motorkennlinie (KL1) auf eine zweite Geräte- und Motorkennlinie (KL2), wenn ein Knickpunkt (K1) der ersten Geräte- und Motorkennlinie (KL1) erreicht wird,
c) Fortsetzung des Betriebs der Werkzeugmaschine (10) gemäß der zweiten Geräte- und Motorkennlinie (KL2).

2. Verfahren nach Anspruch 1
**dadurch gekennzeichnet, dass**
die Geräte- und Motorkennlinien (KL) jeweils einen Knickpunkt (K1, K2) aufweisen, wobei die Knickpunkte (K1, K2) die Geräte- und Motorkennlinien (KL) in einen ersten Bereich (I) und einen zweiten Bereich (II) unterteilen, wobei in dem ersten Bereich (I) eine Drehzahl n im Wesentlichen konstant bleibt, während ein Drehmoment M ansteigt und wobei in dem zweiten Bereich (II) die Drehzahl n stark abfällt.

3. Verfahren nach Anspruch 1 oder 2
**dadurch gekennzeichnet, dass**
das Verfahren mit folgender Maßgabe wiederholt wird:
a) Betrieb der Werkzeugmaschine (10) gemäß einer i-ten Geräte- und Motorkennlinie (KL_i),
b) Umschalten von der i-ten Geräte- und Motorkennlinie (KL_i) auf eine (i+1)-te Geräte- und Motorkennlinie (KL_i+1), wenn ein Knickpunkt (K_i) der i-ten Geräte- und Motorkennlinie (KL_i) erreicht wird,
c) Fortsetzung des Betriebs der Werkzeugmaschine (10) gemäß der (i+1)-ten Geräte- und Motorkennlinie (KL_i+1).

4. Verfahren nach einem der Ansprüche 2 oder 3
**dadurch gekennzeichnet, dass**
die erste Geräte- und Motorkennlinie (KL1) durch Wertepaare (M1, n1) gebildet wird und die zweite Geräte- und Motorkennlinie (KL2) durch Wertepaare (M2, n2) gebildet wird, wobei die Drehzahl n1 im ersten Bereich (I) der ersten Geräte- und Motorkennlinie (KL1) größer ist als die Drehzahl n2 im ersten Bereich (I) der zweiten Geräte- und Motorkennlinie (KL2).

5. Verfahren nach einem der vorhergehenden Ansprüche
**dadurch gekennzeichnet, dass**
der Knickpunkt (K2) der zweiten Geräte- und Motorkennlinie (KL2) im Vergleich zum Knickpunkt (K1) der ersten Geräte- und Motorkennlinie (KL1) zu höheren Drehmomenten M verschoben ist.

6. Verfahren nach einem der Ansprüche 2 bis 5
**dadurch gekennzeichnet, dass**
die zweite Geräte- und Motorkennlinie (KL2) im zweiten Bereich (II) im Vergleich zur ersten Geräte- und Motorkennlinie (KL1) weniger stark abfällt.

7. Verfahren nach einem der vorhergehenden Ansprüche
**dadurch gekennzeichnet, dass**
die Werkzeugmaschine (10) beim Umschalten zwischen zwei Geräte- und Motorkennlinien (KL) ein akustisches und/oder optisches Signal ausgibt.

8. Verfahren nach einem der vorhergehenden Ansprüche
**dadurch gekennzeichnet, dass**
die Werkzeugmaschine (10) bei Erreichen eines zweiten Rückkehrpunkts (RP2) von der zweiten Geräte- und Motorkennline (KL2) zur ersten Geräte- und Motorkennline (KL1) zurückkehrt.

9. Verfahren nach Anspruch 8
**dadurch gekennzeichnet, dass**
ein Drehmomentwert des Knickpunkts (K1) der ersten Geräte- und Motorkennline (KL1) größer ist als ein Drehmomentwert des Rückkehrpunkts (RP2) der zweiten Geräte- und Motorkennline (KL2).

10. Verfahren nach Anspruch 8 oder 9
**dadurch gekennzeichnet, dass**
ein Drehmomentwert des Knickpunkts (K_i) der i-ten Geräte- und Motorkennline (KL_i) größer ist als ein Drehmomentwert des Rückkehrpunkts (RP_i+1) der (i+1)-ten Geräte- und Motorkennline (KL_i+1).

11. Werkzeugmaschine (10) zur Durchführung des Verfahrens nach einem der vorhergehenden Ansprüche.

12. Werkzeugmaschine (10) nach Anspruch 11
**dadurch gekennzeichnet, dass**
die Werkzeugmaschine (10) als Bohrgerät ausgebildet ist, vorzugsweise als Kernbohrgerät, und wobei ein Werkzeug (12) der Werkzeugmaschine (10) eine Bohrkrone ist.

13. Werkzeugmaschine (10) nach Anspruch 11 oder 12
**dadurch gekennzeichnet, dass**
die Werkzeugmaschine (10) dazu eingerichtet ist, bei Erreichen eines zweiten Rücckehrpunkts (RP2) von der zweiten Geräte- und Motorkennline (KL2) zur ersten Geräte- und Motorkennline (KL1) zurückzukehren.

14. Werkzeugmaschine (10) nach einem der Ansprüche 11 bis 13
**dadurch gekennzeichnet, dass**
die Werkzeugmaschine (10) dazu eingerichtet ist, bei Erreichen eines (i+1)-ten Rücckehrpunkts (RP_i+1) von der (i+1)-ten Geräte- und Motorkennline (RP_i+1) zur i-ten Geräte- und Motorkennline (KL_i) zurückzukehren.
